# EUROPEAN PATENT SPECIFICATION

(11) **EP 3 905 410 B1**
(45) Date of publication and mention of the grant of the patent: **07.05.2025**
(21) Application number: 21163007.4
(22) Date of filing: 16.03.2021
(51) Int. Cl.: H01M 10/0525, H01M 50/403, H01M 50/446, H01M 50/449

(54) **COMPOSITE SEPARATING LAYER**
VERBUNDTRENNSCHICHT
COUCHE DE SÉPARATION COMPOSITE

(30) Priority: 13.04.2020 TW 109112320
(43) Date of publication of application: 03.11.2021
(73) Proprietor: Prologium Technology Co., Ltd., Taoyuan City (TW); Prologium Holding Inc., Grand Cayman KY1-1104 (KY)
(72) Inventor: YANG, Szu-Nan, Taoyuan City (TW)
(74) Representative: Cabinet Chaillot

(56) References cited:
- CN-A- 102 569 701
- CN-A- 107 834 104
- CN-A- 110 600 664
- US-A1- 2018 358 652

## Description

### CROSS REFERENCES TO RELATED APPLICATIONS

The present application claims priority to Taiwanese Patent Application 109112320 filed in the Taiwanese Patent Office on Apr. 13, 2020, the entire contents of which is being incorporated herein by reference.

### Field of Invention

The present invention relates to a separating layer of an electrochemical system, in particular to a composite separating layer, which a thickness of the overall separating layer can be greatly reduced.

### Related Art

In the era of energy crisis and energy revolution, secondary chemical energy plays a very important role, especially metal ion batteries with high specific energy and specific power, such as sodium-ion batteries, aluminum-ion batteries, magnesium-ion batteries or lithium-ion batteries. These batteries are applied in information and consumer electronics products, and has recently expanded to the field of transportation energy.

For the metal ions batteries, the conventional separating film formed by the polymers is easily curled under high temperature. Therefore, various types of using heat-resistant materials as the reinforcement of the separating film or directly serve as the main body of the separating film are developed accordingly.

For example, in case of the separating film using a polymer material as a base material substrate and coating with a ceramic reinforcement material, which can slightly improve the thermal stability of the separating film, however the shrinkage or curling of the separating film still cannot be avoided. Alternatively, the ceramic materials are used as the main material of the separating film, and the adhesive is also used to bind the ceramic materials. Such a structure can greatly improve the thermal stability of the separating film. However, the separating film must have enough thickness (about 90 microns to 300 microns) to make the ceramic powders be stacked in multiple layers to avoid the formation of straight through holes. The relatively high thickness is the bottleneck for the separating film with structure when applied in batteries.

US 2018/358652 provides to a multilayer electrolyte cell, in which electrolytes are configured in multiple layers by stacking polymer coating layers containing ceramic solid electrolytes and liquid electrolytes including an ionic liquid in a porous structure base. Therefore, the ceramic solid electrolyte may serve as the separator and include the porous structure base through which lithium ions may pass and the ionic liquid serving as the electrolyte.

CN 107834104 discloses a composite solid electrolyte, which comprises: polyethylene oxide, polyvinylidene fluoride or derivatives thereof, lithium salt and inorganic nanoparticles. The high-performance composite solid electrolyte film is suitable for all-solid-state lithium batteries to improve the solid-to-solid interface compatibility between the electrode and the electrolyte.

CN 110600664 provides a battery separator, which includes a ceramic layer and a first polymer electrolyte layer and a second polymer electrolyte layer which are arranged on two sides of the ceramic layer. Each of the first polymer electrolyte layer and the second polymer electrolyte layer is composed of 10-87% of polymer, 2-30% of ceramic powder, 1-30% of lithium salt and 10-30% of plasticizer. The separator has higher liquid absorption rate, ionic conductivity and fracture elongation rate.

Therefore, this invention provides an impact resistant separating layer with reduced thickness to mitigate or obviate the aforementioned problems.

### SUMMARY OF THE INVENTION

It is an objective of this invention to provide a composite separating layer to greatly lower the overall thickness. Also, the composite separating layer is capable of resisting impact to prevent short circuit caused from the contacting of the positive electrode and the negative electrode due to deformations.

In order to implement the abovementioned, this invention discloses a composite separating layer, which includes a separating body and a structural reinforcing layer disposed on one side of the separating body. The separating body is characterized in that: 1) with ion conductivity; 2) without holes (no soft shorting would be occurred); and 3) with adhesive. Therefore, the separating body is mainly composed of an ion-conductive material.

The structural reinforcing layer is disposed on one side of the separating body and is characterized in that: 1) with ion conductivity; 2) has a mechanical strength higher than a mechanical strength of the separating body and is not easy to deform by force; 3) has higher thermal stability compared with the separating body; and 4) has holes compared with the separating body. Therefore, the structural reinforcing layer is composed of an undeformable structural supporting material and a binder.

Further scope of applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

The present invention will become more fully understood from the detailed description given hereinbelow illustration only, and thus are not limitative of the present invention, and wherein:
FIG. 1 is a schematic diagram of an embodiments of the composite separating layer of this invention.
FIGS. 2A and 2B are schematic diagrams of another embodiments of the composite separating layer of this invention.
FIG. 3 is a schematic diagram of the composite separating layer of this invention applied to an electrochemical system.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a" , "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the description of the present invention, it should be noted that the terms "installation", "connected", and "disposed" are to be understood broadly, and may be fixed or detachable, for example, can be mechanical or electrical, can be connected directly or indirectly, through an intermediate medium, which can be the internal connection between two components. The specific meanings of the above terms in the present invention can be understood in the specific circumstances by those skilled in the art.

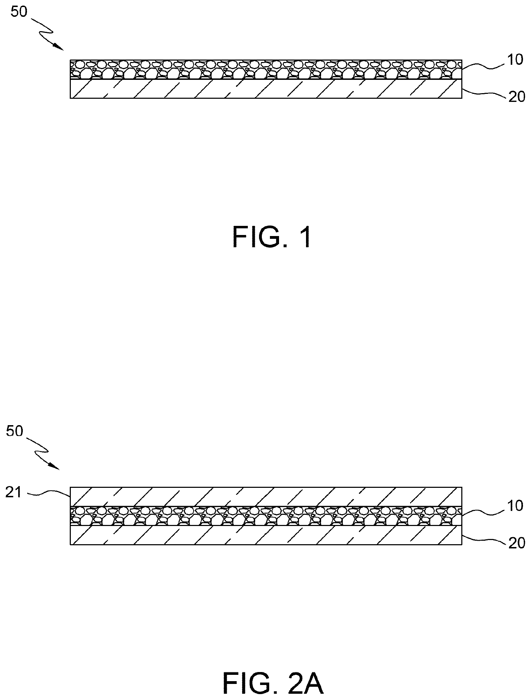

Firstly, the composite separating layer of this invention is adapted for an electrochemical system, such as a lithium battery, to separate a positive electrode and a negative electrode to prevent physical contact therebetween. Please refer to FIG. 1, the composite separating layer 50 of this invention includes a separating body 10 and a structural reinforcing layer 20 disposed on one side of the separating body 10. As sown in FIG. 1, it is demonstrated a side view for the separating body 10 of the composite separating layer 50. The separating body 10 is essentially plate-shaped or sheet-shaped in practice, such as a rectangular parallelepiped (but not limited to). The shape of the separating body 10 may be modified depends on the applied electrochemical systems. Therefore, the separating body 10 has an upper surface and an opposite bottom surface as shown. The structural reinforcing layer 20 is disposed on one side (one of the surface) of the separating body 10. The positional relationship does not limited to that shown in figures. The composite separating layer 50 can be adapted to be utilized in any orientation. A thickness of the separating body is 5-45 microns, and a thickness of the structural reinforcing layer is 5-45 microns.

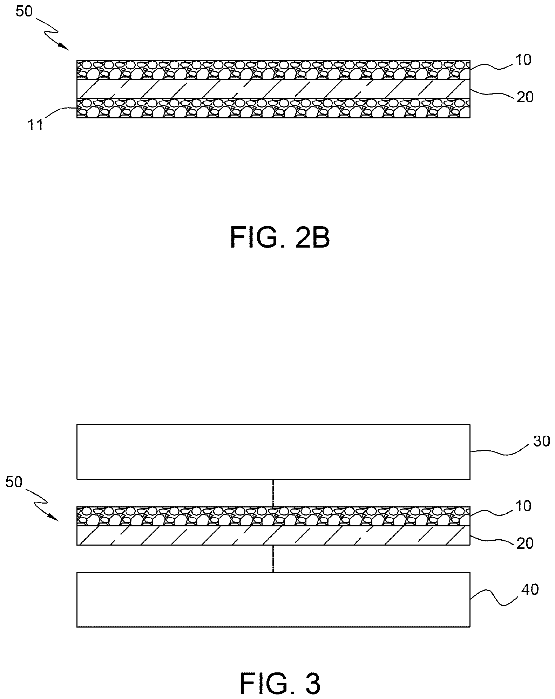

Moreover, please refer to FIGS. 2A and 2B, another structural reinforcing layer 21 may be disposed on opposite side of the separating body 10, or another separating body 11 may be disposed on opposite side of the structural reinforcing layer 20.

The separating body 10 of this invention is characterized in that: 1) with ion conductivity; 2) without holes; and 3) with adhesive. Therefore, the separating body 10 is mainly composed of an ion-conductive material. Due to the separating body 10 is without holes, there is no soft shorting would be occurred. The term "without holes" means that the separating body 10 does not have any blind holes or through holes. Also, the separating body 10 is mainly composed of an ion-conductive material. Therefore, the separating body 10 may be formed by 100% ion-conductive material, or added with certain of ceramic material. The volume content of the ion-conductive material has to be much higher than the volume content of the ceramic material. The ceramic material is selected from an oxide-based solid electrolyte or a passive ceramic material.

The adhesion of the separating body 10 may be achieved through the selection of the ion conductive materials. Therefore, the adhesion is improved between the separating body 10 and the structural reinforcing layer 20, or the electrodes of the applied electrochemical system. If non-adhesive ion conductive materials are selected, the additional binder may be added in the separating body 10 to make the separating body 10 be adhesive.

The structural reinforcing layer 20 is characterized in that: 1) with ion conductivity; 2) has a higher mechanical strength and is not easy to deform by force; 3) has higher thermal stability compared with the separating body 10; and 4) has holes compared with the separating body 10.

The structural reinforcing layer 20 has the mechanical strength higher than the mechanical strength of the separating body 10 and does not deform by force. Therefore, the mechanical strength of the separating body 10 is improved. When the separating body 10 is suffered impact, the contact of the positive electrode and the negative electrode can be avoided due to the presence of the structural reinforcing layer 20. The structural reinforcing layer 20 is composed of an undeformable structural supporting material and a binder.

The undeformable structural supporting material is a ceramic material which is selected from a passive ceramic material or an oxide-based solid electrolyte. The passive ceramic material, such as TiO₂, Al₂O₃, SiO₂, would improve the mechanical strength without ion conductivity. The oxide-based solid electrolyte is a lithium lanthanum zirconium oxide (LLZO) electrolyte or a lithium aluminum titanium phosphate (LATP) electrolyte and their derivatives. The ceramic material added with the separating body 10 may be the same materials.

The binder may be selected from the materials which could not transfer metal ions, such as polyvinylidene fluoride (PVDF), polyimide (PI) or polyacrylic acid (PAA). Also, the binder may be selected from the ion-conductive materials which could transfer metal ions.

On the other hand, the structural reinforcing layer 20 may further include a deformable electrolyte material, which is determined depended on the undeformable structural supporting material. The structural reinforcing layer 20 is essentially formed by stacking of the undeformable structural supporting material mixing with the binder. The holes formed thereof are filled with the deformable electrolyte material. When the undeformable structural supporting material is selected form the passive ceramic material, the deformable electrolyte material is selected from a soft-solid electrolyte, an ionic liquid, an ionic liquid electrolyte, a gel electrolyte, a liquid electrolyte or a combination thereof to fill the holes. Thus, the ionic conductively would be increased. When the undeformable structural supporting material is selected from the oxide-based solid electrolyte, the deformable electrolyte material may be added or not.

The ion-conductive material is mainly composed of a polymer base material, an additive, and an ion supplying material. The polymer base material is capable of allowing metal ions, such as lithium ions, to move inside the material. The additive is capable of dissociating metal salts, such as lithium salts, and is served as a plasticizer. Also, the ion-conductive material further includes a crystal growth inhibiting material to make the primary lattice state of the ion-conductive material be amorphous state to facilitate ion transfer.

The aforementioned polymer base material that allows metal ions, such as lithium ions, to move inside the material refers to a material that does not have metal ions, such as lithium ions, by itself (in the state of raw materials or at the beginning of the electrochemical reaction), but can transfer metal ions, such as lithium ions. For example, the polymer base material may be a linear structural material without containing salts, such as a polyethylene oxide (PEO), or the PEO already containing salts, the ions supplying material, such as PEO-LiCF₃SO₃, PEO-LiTFSI-Al₂O₃ composite solid polymer, PEO-LiTFSI-10% TiO₂ composite solid polymer, PEO-LiTFSI-10% HNT composite solid polymer, PEO-LiTFSI-10% MMT composite solid polymer, PEO-LiTFSI-1% LGPS composite solid polymer or PEO-LiClO₄-LAGP. Or in addition to be able to transfer metal ions, such as lithium ions, it is also a material that can increase the mechanical strength of the film-forming due to its cross-linked structure, such as a poly(ethylene glycol)diacrylate (PEGDA), a poly(ethylene glycol)dimethacrylate (PEGDMA), a poly(ethylene glycol) monomethylether (PEGME), a poly(ethylene glycol) dimethylether (PEGDME), a poly[ethylene oxide-co-2-(2-methoxyethoxy)ethyl glycidyl ether] (PEO/MEEGE), a hyperbranched polymer, such as a poly[bis(triethylene glycol)benzoate], or a polynitrile, such as a polyacrylonitrile (PAN), a poly(methacrylonitrile) (PMAN)or a poly(N-2-cyanoethyl)ethyleneamine) (PCEEI).

The additive, which is capable of dissociating metal salts, such as lithium salts, and is served as a plasticizer, may be selected from a plasticizer, a plastic crystal electrolytes (PCEs) or an ionic liquid, wherein the plastic crystal electrolytes (PCEs) may be a Succinonitrile (SN) [ETPTA//SN; PEO/SN; PAN/PVA-CN/SN], a N-ethyl-N-methylpyrrolidinium, [C₂mpyr] + AnionsN, N-diethyl-pyrrolidinium,[C₂Epyr], a quaternary alkylammonium, a n-alkyltrimethylphosphonium, [P1,1,1,n], a decamethylferro-cenium, [Fe(C₅Me₅)₂], a 1-(N,N-dimethylammonium)-2-(ammonium)ethane triflate ([DMEDAH₂][Tf]₂), an anions=[FSI], [FSA], [CFSA], [BETA], a LiSi(CH₃)₃(SO₄), or a trimethy(lithium trimethylsilyl sulfate). The ionic liquid may select from an imidazolium, such as an anion / bis(trifluoromethanesulfonyl)imide, an anion / bis(fluorosulfonyl)imide, or an anion / trifluoromethanesulfonate, or an ammonium, such as an anion / bis(trifluoromethanesulfonyl)imide, or a pyrrolidinium, such as an anion / Bis(trifluoromethanesulfonyl)imide, an anion / bis(fluorosulfonyl)imide, or a piperidinium, such as an anion / bis(trifluoromethanesulfonyl)imide, an anion / bis(fluorosulfonyl)imide.

The ion supplying material may be a lithium salt, such as a LiTFSI, a LiFSI, a LiBF₄, or a LiPF₆.

The crystal growth inhibiting material is selected from the material for further decreasing in crystallinity, such as a poly(ethyl methacrylate) (PEMA), a poly(methyl methacrylate) (PMMA), a poly(oxyethylene), a poly (cyanoacrylate) (PCA), a polyethylene glycol (PEG), a poly(vinyl alcohol) (PVA), a polyvinyl butyral (PVB), a poly(vinyl chloride) (PVC), a PVC-PEMA, a PEO-PMMA, a poly(acrylonitrile-co-methyl methacrylate) P(AN-co-MMA), a PVA-PVdF, a PAN-PVA, a PVC-PEMA, a polycarbonates, such as a poly(ethylene oxide-co-ethylene carbonate) (PEOEC), a polyhedral oligomeric silsesquioxane (POSS), a polyethylene carbonate (PEC), a poly (propylene carbonate) (PPC), a poly(ethyl glycidyl ether carbonate) (P(Et-GEC), or a poly(t-butyl glycidyl ether carbonate) P(tBu-GEC), a cyclic carbonates, such as a poly (trimethylene carbonate) (PTMC), a polysiloxane-based, such as a polydimethylsiloxane (PDMS), a poly(dimethyl siloxane-co-ethylene oxide) P(DMS-co-EO), or a poly(siloxane-g-ethyleneoxide), a polyesters, such as an ethylene adipate, an ethylene succinate, or an ethylene malonate. Further, the crystal growth inhibiting material may be a poly(vinylidenedifluoridehexafluoropropylene) (PvdF-HFP), a poly(vinylidenedifluoride) (PvdF), or a poly(ε-caprolactone) (PCL).

When applied to the electrochemical system, please refer to FIG. 3, it includes a first electrode 30, a second electrode 40 and a composite separating layer 50 disposed between the first electrode 30 and the second electrode 40. Please note that it is only illustrated the relative locations in the figure, not limited to the relative thickness. The thickness of the overall composite separating layer 50 of this invention is greatly reduced compared to the conventional separating layer. Also, the first electrode 30 may be the positive electrode or the negative electrode, and the second electrode 40 may be the negative electrode or the positive electrode accordingly. In other words, the separating body 10 of the composite separating layer 50 may contact to the positive electrode or the negative electrode. Due to the separating body 10 is adhesive, the separating body 10 and the electrode are bonded very well. Furthermore, although the composite separating layer 50 of this invention contains some materials that can provide metal ions (as described above), it is not the element that mainly supplies metal ions in the electrochemical system. The first electrode 30 and the second electrode 40 have to be contain active materials, such as a lithium metal layer, that mainly provides metal ions. The composite separating layer 50 plays a role to isolate the first electrode 30 and the second electrode 40 to prevent direct contact and short circuit.

Similarly, the embodiments of this invention in FIG. 2A-2B can also be applied to an electrochemical system, and the repeated description is omitted for clarity. Furthermore, the first electrode 30 and the second electrode 40 shown in the foregoing figures are only for illustration, and it does not limit that they are a single-layer structure. For well-known electrochemical systems, the electrodes at least include a current collector and an active material layer.

Accordingly, the present invention provides a composite separating layer adapted to an electrochemical system, such as a lithium ion secondary battery. The separating body is ion-conductive and without holes, and the mechanical strength of the entire separating layer is enhanced by the structural reinforcing layer. **In** this invention, there is no needed to form the ant holes by stacking the ceramic particles. Therefore, the thickness of the composite separating layer of this invention are greatly reduced compared to the thickness of the conventional separating layer.

## Claims

1. A composite separating layer (50), comprising:
a separating body (10), being ion-conductive and without holes, and mainly composed of an ion-conductive material
the ion-conductive material including:
a polymer base material, being capable of allowing metal ions to move inside;
an additive, being capable of dissociating metal salts and be served as a plasticizer;
an ion supplying material; and
a crystal growth inhibiting material to decrease in crystallinity;
and
a structural reinforcing layer (20), disposed on one side of the separating body (10) and having a mechanical strength higher than a mechanical strength of the separating body (10), wherein the structural reinforcing layer (20) is composed of an undeformable structural supporting material and a binder, the binder being an ion-conductive material including:
a polymer base material, being capable of allowing metal ions to move inside;
an additive, being capable of dissociating metal salts and be served as a plasticizer;
an ion supplying material; and
a crystal growth inhibiting material to decrease in crystallinity.

2. The composite separating layer (50) of claim 1, wherein a thickness of the separating body (10) is 5-45 microns, and a thickness of the structural reinforcing layer (20) is 5-45 microns.

3. The composite separating layer (50) of claim 1, wherein the undeformable structural supporting material of the structural reinforcing layer (20) is a ceramic material which is selected from a passive ceramic material or an oxide-based solid electrolyte.

4. The composite separating layer (50) of claim 3, wherein when the undeformable structural supporting material is selected form the passive ceramic material, the structural reinforcing layer (20) further includes a deformable electrolyte material which is selected from a soft-solid electrolyte, an ionic liquid, an ionic liquid electrolyte, a gel electrolyte, a liquid electrolyte or a combination thereof.

5. The composite separating layer (50) of claim 1, wherein the binder is selected from a material which could not transfer metal ions.

6. The composite separating layer (50) of claim 1, wherein the ion supplying material is a lithium salt.

7. The composite separating layer of claim (50) 1, wherein the polymer base material is selected from a polyethylene oxide (PEO), a poly(ethylene glycol)diacrylate (PEGDA), a poly(ethylene glycol)dimethacrylate (PEGDMA), a poly(ethylene glycol) monomethylether (PEGME), a poly(ethylene glycol) dimethylether (PEGDME), a poly[ethylene oxide-co-2-(2-methoxyethoxy)ethyl glycidyl ether] (PEO/MEEGE), a hyperbranched polymer, or a polynitrile.

8. The composite separating layer (50) of claim 1, wherein the additive is a plasticizer, a plastic crystal electrolytes (PCEs) or an ionic liquid.

9. The composite separating layer (50) of claim 1, wherein the structural reinforcing layer (20) further includes a deformable electrolyte material which is selected from a soft-solid electrolyte, an ionic liquid, an ionic liquid electrolyte, a gel electrolyte, a liquid electrolyte or a combination thereof.

10. The composite separating layer (50) of claim 1, wherein the separating body (10) is added with a ceramic material, wherein a volume content of the ion-conductive material is much higher than a volume content of the ceramic material.

11. The composite separating layer (50) of claim 10, wherein the ceramic material is selected from a passive ceramic material or an oxide-based solid electrolyte.

12. The composite separating layer (50) of claim 1, further comprising another structural reinforcing layer (21) disposed on opposite side of the separating body (10).

13. The composite separating layer (50) of claim 1, further comprising another separating body (11) disposed on opposite side of the structural reinforcing layer (20).

## Patentansprüche

1. - Verbundtrennschicht (50), umfassend:
einen Trennkörper (10), der ionenleitend und ohne Löcher ist und hauptsächlich aus einem ionenleitenden Material besteht,
wobei das ionenleitende Material Folgendes beinhaltet:
ein Polymerbasismaterial, das in der Lage ist zu ermöglichen, dass sich Metallionen nach innen bewegen;
ein Additiv, das in der Lage ist, Metallsalze zu dissoziieren und als Weichmacher zu dienen;
ein ionenzuführendes Material; und
ein kristallwachstumshemmendes Material, um Kristallinität zu verringern;
und
eine Strukturverstärkungsschicht (20), die auf einer Seite des Trennkörpers (10) angeordnet ist und eine mechanische Festigkeit aufweist, die höher ist als eine mechanische Festigkeit des Trennkörpers (10), wobei die Strukturverstärkungsschicht (20) aus einem nicht verformbaren Strukturträgermaterial und einem Bindemittel besteht, wobei das Bindemittel ein ionenleitendes Material ist, das Folgendes beinhaltet:
ein Polymerbasismaterial, das in der Lage ist zu ermöglichen, dass sich Metallionen nach innen bewegen;
ein Additiv, das in der Lage ist, Metallsalze zu dissoziieren und als Weichmacher zu dienen;
ein ionenzuführendes Material; und
ein kristallwachstumshemmendes Material, um Kristallinität zu verringern.

2. - Verbundtrennschicht (50) nach Anspruch **1,** wobei eine Stärke des Trennkörpers (10) 5-45 Mikrometer ist und eine Stärke der Strukturverstärkungsschicht (20) 5-45 Mikrometer ist.

3. - Verbundtrennschicht (50) nach Anspruch 1, wobei das nicht verformbare Strukturträgermaterial der Strukturverstärkungsschicht (20) ein keramisches Material ist, das ausgewählt ist aus einem passiven keramischen Material oder einem oxidbasierten Festelektrolyten.

4. - Verbundtrennschicht (50) nach Anspruch 3, wobei, wenn das nicht verformbare Strukturträgermaterial ausgewählt ist aus dem passiven keramischen Material, die Strukturverstärkungsschicht (20) ferner ein verformbares Elektrolytmaterial beinhaltet, das ausgewählt ist aus einem weich-festen Elektrolyten, einer ionischen Flüssigkeit, einem ionischen flüssigen Elektrolyten, einem Gelelektrolyten, einem flüssigen Elektrolyten oder einer Kombination davon.

5. - Verbundtrennschicht (50) nach Anspruch 1, wobei das Bindemittel ausgewählt ist aus einem Material, das keine Metallionen übertragen kann.

6. - Verbundtrennschicht (50) nach Anspruch 1, wobei das ionenzuführende Material ein Lithiumsalz ist.

7. - Verbundtrennschicht (50) nach Anspruch 1, wobei das Polymerbasismaterial ausgewählt ist aus einem Polyethylenoxid (PEO), einem Poly(ethylenglykol)diacrylat (PEGDA), einem Poly(ethylenglykol)dimethacrylat (PEGDMA), einem Poly(ethylenglykol)monomethylether (PEGME), einem Poly(ethylenglykol)dimethylether (PEGDME), einem Poly[ethylenoxid-co-2-(2-methoxyethoxy)ethylglycidylether] (PEO/MEEGE), einem hyperverzweigten Polymer oder einem Polynitril.

8. - Verbundtrennschicht (50) nach Anspruch 1, wobei das Additiv ein Weichmacher, ein Kunstoff-Kristallelektrolyt (PCE - plastic cristal electrolyte) oder eine ionische Flüssigkeit ist.

9. - Verbundtrennschicht (50) nach Anspruch 1, wobei die Strukturverstärkungsschicht (20) ferner ein verformbares Elektrolytmaterial beinhaltet, das ausgewählt ist aus einem weich-festen Elektrolyten, einer ionischen Flüssigkeit, einem ionischen flüssigen Elektrolyten, einem Gelelektrolyten, einem flüssigen Elektrolyten oder einer Kombination davon.

10. - Verbundtrennschicht (50) nach Anspruch 1, wobei dem Trennkörper (10) ein keramisches Material hinzugefügt wird, wobei ein Volumengehalt des ionenleitenden Materials viel höher ist als ein Volumengehalt des keramischen Materials.

11. - Verbundtrennschicht (50) nach Anspruch 10, wobei das keramische Material ausgewählt ist aus einem passiven keramischen Material oder einem Festelektrolyten auf Oxidbasis.

12. - Verbundtrennschicht (50) nach Anspruch 1, ferner umfassend eine weitere Strukturverstärkungsschicht (21), die auf einer gegenüberliegenden Seite des Trennkörpers (10) angeordnet ist.

13. - Verbundtrennschicht (50) nach Anspruch 1, ferner umfassend einen weiteren Trennkörper (11), der auf einer gegenüberliegenden Seite der Strukturverstärkungsschicht (20) angeordnet ist.

## Revendications

1. - Couche de séparation composite (50), comprenant :
un corps de séparation (10), qui est conducteur d'ions et sans trous, et principalement composé d'un matériau conducteur d'ions,
le matériau conducteur d'ions comprenant :
un matériau de base polymère, qui est capable de permettre aux ions métalliques de se déplacer à l'intérieur ;
un additif, qui est capable de dissocier les sels métalliques et de servir de plastifiant ;
un matériau fournissant des ions ; et
un matériau inhibant la croissance cristalline pour diminuer en cristallinité ;
et
une couche de renforcement structural (20), qui est disposée sur un côté du corps de séparation (10) et qui a une résistance mécanique supérieure à une résistance mécanique du corps de séparation (10), la couche de renforcement structural (20) étant composée d'un matériau de support structural indéformable et d'un liant, le liant étant un matériau conducteur d'ions comprenant :
un matériau de base polymère, qui est capable de permettre aux ions métalliques de se déplacer à l'intérieur ;
un additif, qui est capable de dissocier les sels métalliques et de servir de plastifiant ;
un matériau fournissant des ions ; et
un matériau inhibant la croissance cristalline pour diminuer en cristallinité.

2. - Couche de séparation composite (50) selon la revendication 1, dans laquelle une épaisseur du corps de séparation (10) est de 5 à 45 microns, et une épaisseur de la couche de renforcement structural (20) est de 5 à 45 microns.

3. - Couche de séparation composite (50) selon la revendication 1, dans laquelle le matériau de support structural indéformable de la couche de renforcement structural (20) est un matériau céramique qui est choisi parmi un matériau céramique passif ou un électrolyte solide à base d'oxyde.

4. - Couche de séparation composite (50) selon la revendication 3, dans laquelle, lorsque le matériau de support structural indéformable est choisi parmi le matériau céramique passif, la couche de renforcement structural (20) comprend en outre un matériau électrolyte déformable qui est choisi parmi un électrolyte solide mou, un liquide ionique, un électrolyte liquide ionique, un électrolyte en gel, un électrolyte liquide ou une combinaison de ceux-ci.

5. - Couche de séparation composite (50) selon la revendication 1, dans laquelle le liant est choisi parmi un matériau qui ne peut pas transférer d'ions métalliques.

6. - Couche de séparation composite (50) selon la revendication 1, dans laquelle le matériau fournissant des ions est un sel de lithium.

7. - Couche de séparation composite (50) selon la revendication 1, dans laquelle le matériau de base polymère est choisi parmi un poly(oxyde d'éthylène) (PEO), un poly (éthylène glycol) diacrylate (PEGDA), un poly (éthylène glycol) diméthacrylate (PEGDMA), un poly (éthylène glycol) monométhyléther (PEGME), un poly(éthylène glycol) diméthyléther (PEGDME), un poly[éthylène oxyde-co-2-(2-méthoxyéthoxy)éthyl glycidyl éther] (PEO/MEEGE), un polymère hyper-ramifié ou un polynitrile.

8. - Couche de séparation composite (50) selon la revendication 1, dans laquelle l'additif est un plastifiant, un électrolyte cristallin plastique (PCE) ou un liquide ionique.

9. - Couche de séparation composite (50) selon la revendication 1, dans laquelle la couche de renforcement structural (20) comprend en outre un matériau électrolyte déformable qui est choisi parmi un électrolyte solide mou, un liquide ionique, un électrolyte liquide ionique, un électrolyte en gel, un électrolyte liquide ou une combinaison de ceux-ci.

10. - Couche de séparation composite (50) selon la revendication 1, dans laquelle le corps de séparation (10) est additionné d'un matériau céramique, une teneur en volume du matériau conducteur d'ions étant bien supérieure à une teneur en volume du matériau céramique.

11. - Couche de séparation composite (50) selon la revendication 10, dans laquelle le matériau céramique est choisi parmi un matériau céramique passif ou un électrolyte solide à base d'oxyde.

12. - Couche de séparation composite (50) selon la revendication 1, comprenant en outre une autre couche de renforcement structural (21) disposée sur le côté opposé du corps de séparation (10).

13. - Couche de séparation composite (50) selon la revendication 1, comprenant en outre un autre corps de séparation (11) disposé sur le côté opposé de la couche de renforcement structural (20).
